**Europäisches Patentamt**

**European Patent Office**

**Office européen des brevets**

(11) Veröffentlichungsnummer: **0 307 505 B1**

(12) # EUROPÄISCHE PATENTSCHRIFT

(45) Veröffentlichungstag der Patentschrift: **08.05.91**

(51) Int. Cl.⁵: **A01B** 33/06, A01B 33/14

(21) Anmeldenummer: **87113665.1**

(22) Anmeldetag: **18.09.87**

(54) **Bodenbearbeitungsmaschine.**

(43) Veröffentlichungstag der Anmeldung:
**22.03.89 Patentblatt 89/12**

(45) Bekanntmachung des Hinweises auf die
Patenterteilung:
**08.05.91 Patentblatt 91/19**

(84) Benannte Vertragsstaaten:
**AT CH DE ES FR GB IT LI SE**

(56) Entgegenhaltungen:
**DE-A- 2 529 175**

(73) Patentinhaber: **H. Niemeyer Söhne GmbH &
Co. KG
Heinrich-Niemeyer-Strasse 52
W-4446 Hörstel-Riesenbeck(DE)**

(72) Erfinder: **Barlage, Bruno
Beethovenstrasse 13
W-4446 Hörstel(DE)**
Erfinder: **Robert, Franz-Josef
Bornholtstrasse 7
W-4446 Hörstel(DE)**

(74) Vertreter: **Busse & Busse Patentanwälte
Postfach 1226 Grosshandelsring 6
W-4500 Osnabrück(DE)**

## Beschreibung

Die Erfindung bezieht sich auf eine Bodenbearbeitungsmaschine nach dem Oberbegriff des Patentanspruchs 1.

Bei einer bekannten Bodenbearbeitungsmaschine dieser Art (DE-A-25 29 175) bilden die Rastvorrichtungen Überlastsicherungen, durch die jedes Bodenbearbeitungswerkzeug einzeln und unabhängig abgesichert ist. Dabei sind im Nabenkörper einander diametral gegenüberliegende, in Bezug auf die Antriebswelle des Werkzeugträgers radial verlaufende Sackbohrungen vorgesehen, in denen jeweils eine Druckfeder untergebracht ist, die eine als Rastelement vorgesehene Rastkugel hintergreift. Diese Rastkugel steht in ihrer Raststellung aus der Sackbohrung vor und greift in eine Vertiefung in einem Innenringbereich des Zahnrades verriegelnd ein. Bei Auftreten von Überlast, z.B. durch das Auftreffen des Bodenbearbeitungswerkzeuges auf einen Stein, bewegen sich die Rastkugeln aus ihren Vertiefungen heraus und geben das den Nabenkörper für eine ausweichende Schwenkbewegung der Antriebswelle des Bodenbearbeitungswerkzeuges frei. Nach Zurücklegen eines Schwenkwinkels von 180° rasten dann die Rastkugeln wieder in ihren Vertiefungen ein, womit die Kupplung zwischen Zahnrad und Nabenkörper wiederhergestellt ist.

In steinigen Böden mit häufigem Ansprechen der Überlastsicherungen treten entsprechend häufige Störungen im Ablauf der Bodenbearbeitung durch den vorübergehenden Arbeitsausfall des Bodenbearbeitungswerkzeuges auf. Zudem geht mit Aus- und Einrastvorgängen ein erheblicher Verschleiß einher.

Der Erfindung liegt die Aufgabe zugrunde, eine Bodenbearbeitungsmaschine der eingangs genannten Art zu schaffen, bei der ohne Minderung der Schutzwirkung der Rastvorrichtungen auf die ihnen zugeordneten Bodenbearbeitungswerkzeuge deren Ansprechhäufigkeit herabgesetzt ist. Diese Aufgabe löst die Erfindung ausgehend von einer Bodenbearbeitungsmaschine nach dem Oberbegriff des Patentanspruchs 1 mit den in dessen kennzeichnenden Teil angegebenen Merkmalen. Hinsichtlich wesentlicher weiterer Ausgestaltungen wird auf die Patentansprüche 2 bis 9 verwiesen.

Der Freilauf in den Rastvorrichtungen ermöglicht es den Bodenbearbeitungswerkzeugen, z.B. den Zinkenkreiseln bei Kreiseleggen, eine begrenzte Schwenkbewegung auszuführen, die in vielen Fällen auftretender Belastungen durch Kollision mit Steinen ausreicht, die Steine passieren zu lassen und Antriebsunterbrechungen zu vermeiden.

Weitere Einzelheiten ergeben sich aus der nachfolgenden Beschreibung und der Zeichnung, in der zwei Ausführungsbeispiele des Gegenstands der Erfindung näher veranschaulicht sind. In der Zeichnung zeigen:

Fig. 1  eine erste Ausführung einer Bodenbearbeitungsmaschine nach der Erfindung in einem vertikalen Schnitt durch die Drehachse eines Bodenbearbeitungswerkzeuges,

Fig. 2  einen abgebrochenen Schnitt nach der Linie II-II in Fig. 1,

Fig. 3  einen abgebrochenen Schnitt nach der Linie III-III in Fig. 2,

Fig. 4  eine Darstellung ähnlich Fig. 1 einer zweiten Ausführung einer Bodenbearbeitungsmaschine nach der Erfindung, und

Fig. 5  einen abgebrochenen Schnitt nach der Linie V-V in Fig. 4.

Als Bodenbearbeitungsmaschine ist in der Zeichnung eine Kreiselegge dargestellt, in der sich die Erfindung bevorzugt verkörpert. Als Bodenbearbeitungsmaschine kommt jedoch auch jede andere Ausführung mit rotierend angetriebenen Bodenbearbeitungswerkzeugen, z.B. Kreiselhacken, in Betracht, bei denen die Bodenbearbeitungswerkzeuge im Betrieb einer Überlastsicherung bedürfen.

Die dargestellte Bodenbearbeitungsmaschine umfaßt ein sich quer zur Fahrtrichtung der Maschine im Betrieb gemäß Pfeil 1 verlaufendes Trägergehäuse 2 in Gestalt eines Hohlbalkens, unter dem mehrere Bodenbearbeitungswerkzeuge nebeneinander angeordnet sind. Der Hohlbalken bildet ein geschlossenes Getriebegehäuse, das die in ihm untergebrachten Teile kapselt und bevorzugt ein Ölbad umfaßt.

Als Bodenwerkzeuge sind bei der dargestellten Kreiselegge Zinken oder Messer 3 vorgesehen, von denen je ein Paar an einem gemeinsamen Werkzeugträger 4 befestigt ist und gemeinsam eine Werkzeugeinheit bilden. Der Werkzeugträger 4, von dem beispielsweise bei Kreiseleggen von 2,50 m Arbeitsbreite 10 Stück vorgesehen sind, sitzt fest auf dem unteren Ende einer Antriebswelle 6, die mittels Lager 7,8 drehbar im Trägergehäuse 2 gelagert ist und bei dem dargestellten Beispiel eine vertikale Drehachse 9 aufweist. Als Drehantrieb für die Werkzeugträger 4 ist ein Zahnrädergetriebe 10 mit je einem Zahnrad 11 je Werkzeugträger 4 vorgesehen. Bei dem dargestellten Beispiel kämmen die Zahnräder 11 unmittelbar miteinander, so daß die Werkzeugträger 4 einen Zwangsantrieb mit abwechselnder Drehrichtung erhalten.

Das Zahnrad 11 ist jeweils auf einem verdrehfest auf der Antriebswelle 6 angebrachten Nabenkörper 12 verdrehbar und dabei mittels einer Gleitlagerbüchse 13 auch begrenzt axial verschiebbar abgestützt und dabei mit dem Nabenkörper durch eine Rastvorrichtung 14 gekuppelt, die gegen eine Federvorspannung bei Überlast vorübergehend auslösbar ist.

Die Rastvorrichtung 14 umfaßt einen Freilauf, durch den der Nabenkörper 12 innerhalb eines vorgegebenen Freiwinkels 15 relativ zu seinem Zahnrad 11 um die beiden Teilengemeinsame Drehachse 9 verschwenkbar ist. Dieser Freiwinkel 15 beträgt 5° bis 20° und liegt vorzugsweise bei etwa 10°.

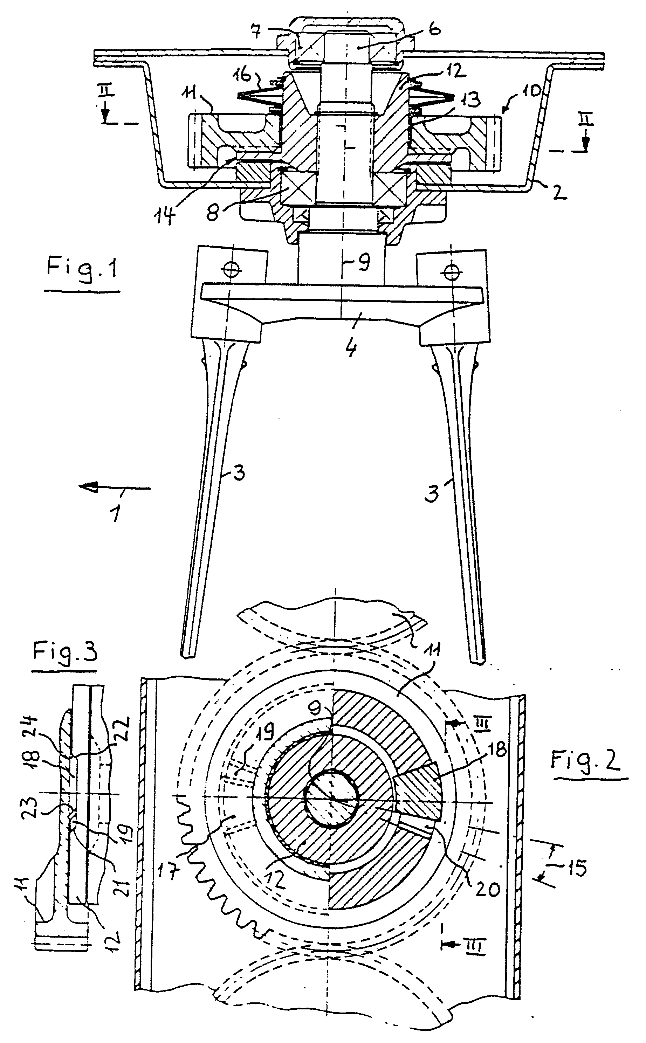

Bei dem Ausführungsbeispiel gemäß Fig. 1 bis 3 ist jedes Zahnrad 11 auf seinem Nabenkörper 12 axial gegen die Wirkung von zwei Tellerfedern 16 aus einer in Fig. 1 dargestellten unteren Raststellung in eine obere Freigabestellung verschiebbar, und das Zahnrad 11 ist dabei unterseitig mit zwei diametral angeordneten, ringsegmentförmigen Rastnocken 17,18 versehen, die mit ihrerseits ringsegmentförmigen Rasttaschen 19,20 im Nabenkörper 12 zusammenwirken. Dabei ist der Zentriwinkel der Rastnocken 17,18 kleiner als der Zentriwinkel der Rasttaschen 19,20, und die Zentriwinkeldifferenz entspricht dem Freiwinkel 15 des Freilaufs. Die beiden jeweils radial ausgerichteten Begrenzungswände 21,22 der Rasttaschen 19,20 sind, wie dies insbesondere der Fig. 3 entnommen werden kann, unter 30° bis 60°, vorzugsweise etwa 45°, schräg aufwärts auswärts geneigt und liegen den beiden ebenfalls radial ausgerichteten Begrenzungswänden 23,24 der Rastnocken 17,18 parallelflächig gegenüber.

Die Rastnocken 17,18 in Verbindung mit den zugehörigen Rasttaschen 19,20 bilden auf diese Weise eine Rastvorrichtung 14, deren Überlastmoment exakt bestimmbar und im übrigen durch Veränderung der Vorspannkraft der Federn 16 einstellbar ist. Die Begrenzungswände 21,23 bzw. 22,24 haben jeweils eine verhältnismäßig große, entlang einer Radiallinie ausgerichtete Kontaktflächen. Diese werden durch die Höhe der Rastnocken 17,18 mitbestimmt, die vorzugsweise bei etwa 4 mm liegt und im übrigen die Tiefe der Rasttaschen 19,20 geringfügig unterschreitet.

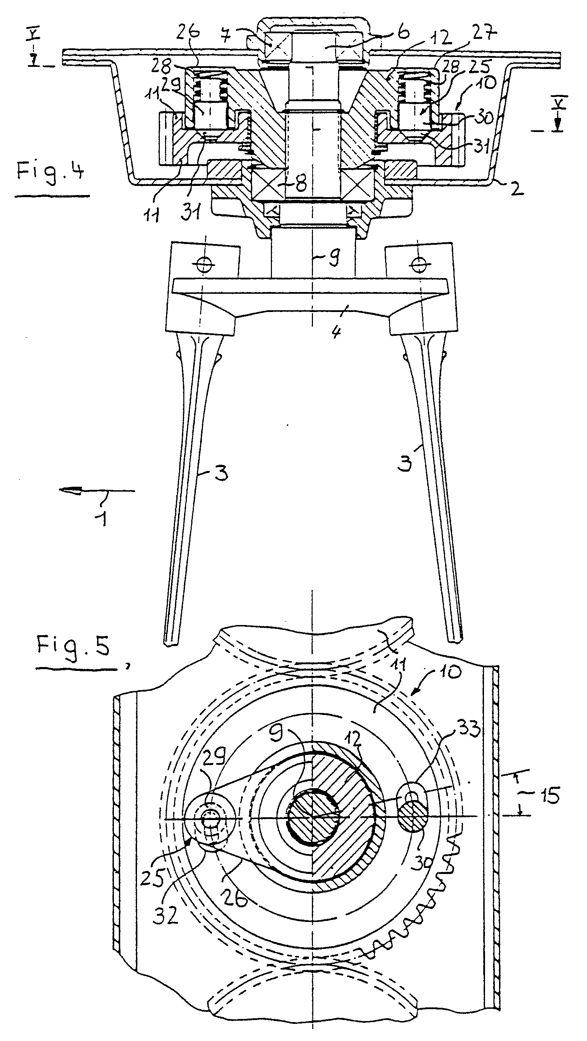

Bei der Ausführung der Bodenbearbeitungsmaschine nach Fig. 4 und 5 ist eine Rastvorrichtung 25 vorgesehen, die in der konstruktiven Gestaltung von der Rastvorrichtung 14 nach Fig. 1 bis 3 abweicht, grundsätzlich aber eine analoge Funktion erfüllt und ebenfalls mit Freilauf versehen ist.

Im Gegensatz zur Ausführung nach Fig. 1 bis 3 ist bei der Ausführung nach Fig. 4 und 5 das Zahnrad 11 lediglich um die Drehachse 9 verdrehbar, nicht jedoch axial verschiebbar auf dem Nabenkörper 12 abgestützt, so daß bei Eintreten des Überlastfalles die Zahnräder 11 in ihrer in Fig. 4 veranschaulichten Betriebsstellung verbleiben. Der Nabenkörper 12 weist obere, das Zahnrad 11 übergreifende radiale Ansätze 26,27 auf, und diese bilden Träger für zwei diametral angeordnete, axial gegen die Vorspannung von Spiraldruckfedern 28 verschieblich abgestützte Rastzapfen 29,30, die jeweils an ihrem unteren Ende einen kegeligen Eingriffsteil 31 besitzen. Das Zahnrad 11 ist dabei mit zwei koaxial zur Drehachse 9 verlaufenden ringschlitzförmigen, am oberen Rand ebenfalls kegelig angeschrägten Rasttaschen 32,33 versehen, die sich in Umfangsrichtung über einen dem Freiwinkel 15 des Freilaufs entsprechenden Zentriwinkel erstrecken.

Die Rastvorrichtungen 14,25 erlauben mit ihrem Freilauf den Werkzeugträgern 4 relative Drehbewegungen zu den Zahnrädern 11, die bei Kollisionen mit Steinen als Ausweichsbewegungen häufig ausreichen, um ein Passieren der Steine zu ermöglichen, ohne daß die Überlastsicherung durch Auslösen der Rastvorrichtungen 14,25 in Wirkung treten muß. Nach einer Auslösung der Rastvorrichtungen 14,25 tritt die Kupplung zwischen den Zahnrädern 11 und den Nabenkörpern 12 jeweils nach einer 180°-Drehbewegung wieder ein, wobei der Freilauf einen sicheren Kupplungsvorgang auch bei hohen Umfangsgeschwindigkeiten im Kupplungsbereich gewährleistet, die bei 3m/s liegen können.

Dem Trägergehäuse 2 kann, was nicht näher dargestellt ist, eine Überwachungsvorrichtung zugeordnet sein, welche die Rast- bzw. die Freigabestellung der Rastvorrichtungen 14,25 ermittelt. Eine solche Ermittlung kann beispielsweise durch Abfühlen der Höhenlage der Zahnräder 11 oder der Höhenlage der Rastzapfen 29,30 erfolgen und elektronisch vorgenommen und zur Anzeige gebracht werden.

## Ansprüche

1. Bodenbearbeitungsmaschine, insbesondere Kreiselegge, mit einem sich quer zur Fahrtrichtung (1) erstreckenden Trägergehäuse (2), mehreren nebeneinander am Trägergehäuse (2) angeordneten Bodenbearbeitungswerkzeugen (3), die jeweils einen Werkzeugträger (4) und eine mit diesem verbundene, im Trägergehäuse (2) drehbar gelagerte Antriebswelle (6) umfassen, und mit einem Drehantrieb für die Werkzeugträger (4), der ein im Trägergehäuse (2) angeordnetes Zahnrädergetriebe (10) mit je einem Zahnrad (11) je Werkzeugträger (4) aufweist, das auf einem verdrehfest auf der Antriebswelle (6) angebrachten Nabenkörper (12) verdrehbar abgestützt und mit diesem durch eine unter Federvorspannung stehende, bei Überlast vorübergehend auslösbare Rastvorrichtung (14;25) gekuppelt ist, dadurch gekennzeichnet, daß die Rastvorrichtung (14;25) einen Freilauf umfaßt, durch den der Nabenkörper (12) innerhalb eines vorgegebenen Freiwinkels (15) relativ zum Zahnrad (11) verschwenkbar ist.

2. Maschine nach Anspruch 1, dadurch gekennzeichnet, daß der Freiwinkel (15) 5° bis 20°, vorzugsweise 10°, beträgt.

3. Maschine nach Anspruch 1 oder 2, dadurch gekennzeichnet, daß das Zahnrad (11) auf seinem Nabenkörper (12) axial gegen Federwirkung aus einer unteren Raststellung in eine obere Freigabestellung verschiebbar und unterseitig mit zwei diametral angeordneten, ringsegmentförmigen Rastnocken (17,18) versehen ist, die mit ringsegmentförmigen Rasttaschen (19,20) am Nabenkörper (12) zusammenwirken, deren Zentriwinkel um den Freiwinkel (15) des Freilaufs größer ist als der der Rastnocken (17,18).

4. Maschine nach Anspruch 3, dadurch gekennzeichnet, daß die beiden radial ausgerichteten Begrenzungswände (21,22) der Rasttaschen (19,20) eine Neigung von etwa 30° bis 60°, vorzugsweise etwa 45°, aufweisen und die beiden radial ausgerichteten Begrenzungswänden (23,24) der Rastnocken (17,18) diesen parallelflächig gegenüberliegen.

5. Maschine nach Anspruch 3 oder 4, dadurch gekennzeichnet, daß die Rastnocken (17,18) eine Höhe von etwa 4 mm und die Rasttaschen (19,20) eine geringfügig größere Tiefe aufweisen.

6. Maschine nach Anspruch 1 oder 2, dadurch gekennzeichnet, daß der Nabenkörper (12) zwei diametral angeordnete, axial gegen Federdruck verschieblich abgestützte Rastzapfen (29,30) mit kegeligem Eingriffsteil (31) aufweist und das Zahnrad (11) mit zwei koaxial verlaufenden ringschlitzförmigen, am oberen Rand ebenfalls kegelig angeschrägten Rasttaschen (32,33) versehen ist, die sich in Umfangsrichtung über einen dem Freiwinkel (15) des Freilaufs entsprechenden Zentriwinkel erstrecken.

7. Maschine nach Anspruch 6, dadurch gekennzeichnet, daß der Nabenkörper (12) das Zahnrad (11) übergreifende Ansätze (26,27) als Träger für die Rastzapfen (29,30) aufweist.

8. Maschine nach Anspruch 3 oder 6, dadurch gekennzeichnet, daß die Vorspannung der Federn (16;28) der Rastvorrichtungen (14,25) einstellbar ist.

9. Maschine nach einem der Ansprüche 1 bis 8, gekennzeichnet durch eine dem Trägergehäuse (2) zugeordnete, die Rastund die Freigabestellung der Rastvorrichtungen (14;25) ermittelnde und anzeigende Überwachungsvorrichtung.

## Claims

1. A soil working machine, particularly a circular spike harrow with a carrier housing (2) extending transversely to the direction of travel (1), a plurality of soil working tools (3) disposed adjacent one another on the carrier housing (2) and each of which comprises a tool carrier (4) and connected to it a drive shaft (6) which is rotatably mounted in the carrier housing (2), and with a rotary drive for the tool carrier (4) and comprising, disposed in the carrier housing (2), a gearwheel transmission (10) with one gearwheel (11) for each tool carrier (4), said gearwheel being braced to rotate on a hub member (12) rotationally rigidly mounted on the drive shaft (6), being coupled to said hub member (12) by a catch device (14, 25) which is subject to initial spring tension and which is adapted to be temporarily released under overload conditions, characterised in that the catch device (14, 25) comprises a freewheeling mechanism by which the hub member (12) is pivotable within a predetermined angle (15) in relation to the gearwheel (11).

2. A machine according to claim 1, characterised in that the free angle (15) amounts to 5° to 20° and is preferably 10°.

3. A machine according to claim 1 or 2, characterised in that on its hub member (12) the gearwheel (11) is axially displaceable against the action of a spring so that it moves out of a lower arrested position and an upper released position and is provided on its under side with two diametrically opposite segment-shaped catch projections (17, 18) which co-operate with segment-shaped catch recesses (19, 20) on the hub member (12), of which the central angle about the free angle (15) of the freewheeling arrangement is greater than that of the catch projections (17, 18).

4. A machine according to claim 3, characterised in that the two radially orientated boundary walls (21, 22) of the catch recesses (19, 20) have an angle of inclination of about 30° to 60° and preferably about 45°, the two radially orientated boundary walls (23, 24) of the catch projections (17, 18) having their surfaces opposite to and parallel with these latter.

5. A machine according to claim 3 or 4, characterised in that the catch projections (17, 18) have a height of about 4 mm while the catch recesses (18, 20) have a slightly greater depth.

6. A machine according to claim 1 or 2, characterised in that the hub member (12) comprises two diametrically disposed catch studs (29, 30) with a conical engaging part (31) and which are supported for axial displacement against spring pressure and in that the gearwheel (11) is provided with two coaxially extending annular slot-shaped catch recesses (32, 33) which are at their upper edge likewise conically chamfered and which extend in a peripheral direction over a central angle corresponding to the free angle (15) of the freewheeling arrangement.

7. A machine according to claim 6, characterised in that the hub member (12) has engaging over the gearwheel (11) projections (26, 27) which serve as carriers for the catch studs (29, 30).

8. A machine according to claim 3 or 6, characterised in that the initial tension of the springs (16, 28) of the catch devices (14, 25) is adjustable.

9. A machine according to one of claims 1 to 8, characterised by a monitoring device associated with the carrier housing (2) and which ascertains and indicates the arrested and released positions of the catch devices (14, 25).

**Revendications**

1. Machine pour travailler le sol, en particulier herse rotative comprenant un carter support (2) s'étendant transversalement à la direction de marche (1), plusieurs outils de travail du sol (3) disposés côte à côte sur le carter support (2), qui comprennent respectivement un porte-outils (4) et un arbre d'entraînement (6) relié à celui-ci, qui est monté libre en rotation dans le carter support (2), ainsi qu'un entraînement rotatif des porte-outils (4), qui présente un engrenage à roues dentées (10) disposé dans le carter-support (2), avec respectivement une roue dentée (11) par porte-outils (4), qui s'appuie avec liberté de rotation sur un corps à moyeu (12) monté calé en rotation sur l'arbre d'entraînement (6) et est couplé avec celui-ci au moyen d'un dispositif d'arrêt (14 ; 25) soumis à la précontrainte d'un ressort et déclenchable provisoirement en cas de surcharge, caractérisée en ce que le dispositif d'arrêt (14 ; 25) comporte une course libre, au moyen de laquelle le corps à moyeu (12) peut pivoter par rapport à la roue dentée (11) dans les limites d'un angle d'incidence (15) donné.

2. Machine selon la revendication 1, caractérisée en ce que l'angle d'incidence (15) va de 5° à 20°, de préférence 10°.

3. Machine selon la revendication 1 ou 2, caractérisée en ce que la roue dentée (11) est déplaçable axialement sur son corps à moyeu (12) contre l'action d'un ressort d'une position inférieure d'arrêt à une position supérieure de déblocage et est pourvue sur sa face inférieure de saillies d'arrêt (17, 18) en forme de segments annulaires disposées diamétralement, qui sont associées à des poches d'arrêt (19, 20) en forme de segments annulaires du corps à moyeu (12), dont l'angle au centre est supérieur de l'angle d'incidence (15) de la course libre à celui des saillies d'arrêt (17, 18).

4. Machine selon la revendication 3, caractérisée en ce que les deux parois de délimitation (21, 22) des poches d'arrêt (19, 20) présentent une inclinaison d'environ 30° à 60°, de préférence 45°, et en ce que les deux parois de délimitation (23, 24) alignées radialement des saillies d'arrêt (17, 18) sont situées en regard avec des faces parallèles.

5. Machine selon la revendication 3 ou 4, caractérisée en ce que les saillies d'arrêt (17, 18) ont une hauteur d'environ 4 mm et en ce que les poches d'arrêt (19, 20) présentent une profondeur légèrement supérieure.

6. Machine selon la revendication 1 ou 2, caractérisée en ce que le corps à moyeu (12) présente deux tenons d'arrêt (29, 30) disposés diamétralement, maintenus appuyés et déplaçables axialement en opposition à la pression de ressorts, ayant une partie d'engrènement conique (31) et en ce que la roue dentée (11) est pourvue sur son bord supérieur de deux poches d'arrêt (32, 33), également chanfreinées suivant un profil conique, qui s'étendent coaxialement sous forme de fentes annulaires et qui couvrent suivant la direction périphérique un angle au centre correspondant à l'angle d'incidence (15) de la course libre.

7. Machine selon la revendication 6, caractérisée en ce que le corps à moyeu (12) présente des appendices (26, 27) recouvrant la roue dentée (11) en tant que supports des tenons d'arrêt (29, 30).

8. Machine selon la revendication 3 ou 6, caractérisée en ce que la précontrainte des ressorts (16 ; 28) des dispositifs d'arrêt (14 ; 25) est réglable.

9. Machine selon l'une des revendications 1 à 8, caractérisée par un dispositif de surveillance adjoint au carter-support (2) qui détermine et signale les positions d'arrêt et de libération des dispositifs d'arrêt (14 ; 25).

EP 0 307 505 B1

Fig.1

Fig.3

Fig.2

7

Fig.4

Fig.5